(19)

Europäisches
Patentamt

European
Patent Office

Office européen
des brevets

(11) EP 4 748 792 A1

(12) EUROPEAN PATENT APPLICATION
published in accordance with Art. 153(4) EPC

(43) Date of publication:
27.05.2026 Bulletin 2026/22

(51) International Patent Classification (IPC):
C01D 1/04 (2006.01)        C01D 1/42 (2006.01)
B01D 1/28 (2006.01)        B01D 1/30 (2006.01)

(21) Application number: 25834840.8

(22) Date of filing: 17.07.2025

(86) International application number:
PCT/KR2025/010523

(87) International publication number:
WO 2026/071431 (02.04.2026 Gazette 2026/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 26.09.2024 KR 20240131171

(71) Applicant: LG Chem, Ltd.
Seoul 07336 (KR)

(72) Inventors:
• CHO, Hyun Jun
  Seoul 07796 (KR)
• LEE, Sung Kyu
  Seoul 07796 (KR)

(74) Representative: Goddar, Heinz J.
Boehmert & Boehmert
Anwaltspartnerschaft mbB
Pettenkoferstrasse 22
80336 München (DE)

(54) **METHOD FOR CONCENTRATING SODIUM HYDROXIDE SOLUTION**

(57) Provided is a method for concentrating a sodium hydroxide aqueous solution including: in a stepwise concentration process of sodium hydroxide aqueous solution, including a concentration part in which a plurality of evaporators from a first evaporator to a nth evaporator are connected in series, adding a sodium hydroxide aqueous solution to the first evaporator and then performing evaporation to obtain a first sodium hydroxide concentrate, and recovering steam evaporated from the sodium hydroxide aqueous solution; and adding the first sodium hydroxide concentrate to an evaporator at a subsequent stage, and adding the steam recovered from the first evaporator to a mechanical vapor recompression device to perform compression, wherein the nth evaporator uses the compressed steam as a heat source.

【FIG. 1】

EP 4 748 792 A1

**Description**

[Technical Field]

CROSS-REFERENCE TO RELATED APPLICATIONS

The present application claims the benefit of priority to Korean Patent Application No. 10-2024-0131171, filed on September 26, 2024, the entire contents of which are incorporated herein as a part of the specification.

Technical Field

The present disclosure relates to a method for concentrating a sodium hydroxide aqueous solution, and more particularly, to a method of using steam produced when evaporating and concentrating a sodium hydroxide aqueous solution in an evaporator at the foremost stage, as a heat source of an evaporator at the last stage, in a stepwise concentration process of the sodium hydroxide aqueous solution including a concentration part in which a plurality of evaporators are connected in series.

[Background Art]

Sodium hydroxide (NaOH) is shipped as a product, after electrolyzing sodium chloride (NaCl) to obtain a sodium hydroxide aqueous solution having a concentration of about 30 wt% and then evaporating and concentrating the solution until the concentration of sodium hydroxide is about 50 wt%.
Specifically, it is a common evaporation and concentration method to heat a caustic soda (sodium hydroxide) aqueous solution in an evaporator to evaporate water and separate a heated and concentrated concentrate and evaporated water vapor in the evaporator. Herein, there is a demand for development of a technology of promoting energy saving by recovering latent heat of steam produced in the evaporator while more efficiently concentrating the sodium hydroxide aqueous solution, and minimizing steam usage used when evaporator heating is required.
For example, as a method for concentrating the sodium hydroxide aqueous solution, there is a method of using a plate-type heat exchanger as an evaporator. In this case, miniaturization of a device may be promoted by improving thermal efficiency in a heat transfer surface of the plate-type heat exchanger used in the evaporator, but there is a limit to the energy saving effect.

**[Disclosure]**

[Technical Problem]

In order to solve the problems mentioned in the Background Art, an object of the present disclosure is to provide a method for concentrating a sodium hydroxide aqueous solution, which may reduce steam usage and cooling water usage in a sodium hydroxide evaporation concentration process and further simplify the process.
However, the object to be solved in the present disclosure is not limited to the object mentioned above, and other objects which are not mentioned may be clearly understood by a person skilled in the art from the following descriptions.

[Technical Solution]

In one general aspect, a method for concentrating a sodium hydroxide aqueous solution includes: in a stepwise concentration process of sodium hydroxide aqueous solution, including a concentration part in which a plurality of evaporators from a first evaporator to a nth evaporator are connected in series, adding a sodium hydroxide aqueous solution to the first evaporator and then performing evaporation to obtain a first sodium hydroxide concentrate, and recovering steam evaporated from the sodium hydroxide aqueous solution; and adding the first sodium hydroxide concentrate to an evaporator at a subsequent stage, and adding the steam recovered from the first evaporator to a mechanical vapor recompression device to perform compression.
In addition, the nth evaporator may use the compressed steam as a heat source.

[Advantageous Effects]

According to the method for concentrating a sodium hydroxide aqueous solution of the present disclosure, steam usage and cooling water usage in a concentration process may be reduced, and the process may be further simplified.
Specifically, steam evaporated from the sodium hydroxide aqueous solution added to an evaporator at the foremost stage may be compressed to produce high-quality and high-pressure steam, which is used as a heat source of the evaporator at the last stage, thereby reducing steam usage added to the process from the outside.

In addition, according to the present disclosure, high-pressure steam in an amount exceeding a heat source supply amount required in an evaporation process may be produced to generate surplus steam, the surplus steam may be supplied to the outside, and thus, economic feasibility may be improved.

An effect which may be obtained in the present disclosure is not limited to the effects mentioned above, and other effects which are not mentioned will be understood clearly by a person with ordinary skill in the art to which the present disclosure pertains from the following description.

[Description of Drawings]

FIG. 1 is a concentration process flow diagram of a sodium hydroxide aqueous solution according to an exemplary embodiment of the present disclosure.

FIG. 2 is a concentration process flow diagram of a sodium hydroxide aqueous solution according to Comparative Example 1.

FIG. 3 is a concentration process flow diagram of a sodium hydroxide aqueous solution according to Comparative Example 2.

[Best Mode]

The terms and words used in the description and claims of the present disclosure are not to be construed limitedly as having general or dictionary meanings but are to be construed as having meanings and concepts meeting the technical ideas of the present disclosure, based on a principle that the inventors are able to appropriately define the concepts of terms in order to describe their own disclosure in the best mode.

Regarding description of the drawings, similar reference numerals may be used for similar or related constituent elements.

A singular form of a noun corresponding to an item may include one or a plurality of items, unless otherwise explicitly stated in the relevant context.

In the present disclosure, each of the phrases such as "A or B", "at least one of A and B", "at least one of A or B", "A, B, or C", "at least one of A, B, and C", and "at least one of A, B, or C" may include any one of the items listed together with the corresponding phrase of the phrases or all possible combinations of them.

The term "and/or" includes a combination of a plurality of described related constituent elements or any one of a plurality of described related constituent elements.

The terms such as "1st" or "2nd", or "first" or "second" may be simply used for distinguishing a corresponding constituent element from other corresponding constituent elements, and the corresponding constituent elements are not limited in other aspects (e.g.: importance or order).

In addition, the terms such as "front surface", "back surface", "upper surface", "lower surface", "side surface", "left", "right", "upper", and "lower" used in the present disclosure are defined based on drawings, and the shape and position of each constituent element are not limited by the terms.

The terms "comprises" or "have" are intended to specify the presence of stated features, steps, operations, constituent elements, parts, or a combination thereof, but do not preclude the presence or addition of one or more other features, numerals, steps, operations, constituent elements, parts, or a combination thereof.

When it is described that a constituent element is "connected to", "combined with", "supported on", or "in contact with" other constituent elements, it includes not only the case in which the constituent elements are directly connected, combined, supported, or in contact, but also the case in which they are indirectly connected, combined, supported, or in contact through a third constituent element.

When it is described that a constituent element is positioned "on" other constituent element, it includes not only the case in which the constituent element is in contact with another constituent element, but also the case in which another constituent element is present between the two constituent elements.

In addition, when unique manufacture and material allowable errors are suggested in the mentioned meaning, the terms such as "about" and "substantially" used in the present disclosure are used in the meaning of the numerical value or in the meaning close to the numerical value, and are used for preventing the disclosure mentioning a correct or absolute numerical value for better understanding of the present disclosure from being unfairly used by an unconscionable infringer.

The term "stream" used in the present disclosure may refer to a fluid flow in a process or may refer to a fluid itself flowing in a pipe. Specifically, the stream may refer to both a fluid itself flowing in a pipe connecting each device and a fluid flow. In addition, the fluid may include any one or more components of gas, liquid, and solid.

The term "upper portion" used in the present disclosure refers to, unless otherwise stated, a point at 0% to 20% of the height measured downward from the top of a device, and specifically, may refer to a top (tower top). In addition, the term "lower portion" refers to a point at 80% to 100% of the height measured downward from the top of a device, and specifically, may refer to a bottom (tower bottom).

The term "pressure" mentioned in the present disclosure refers to an absolute pressure measured based on absolute vacuum, unless otherwise particularly stated.

An operating temperature of an evaporator mentioned in the present disclosure may include both a temperature of a stream added to the evaporator and a temperature of a stream charged from the evaporator.

Hereinafter, the present disclosure will be described in more detail.

According to the present disclosure, in a stepwise concentration process of a sodium hydroxide aqueous solution, including a concentration part in which a plurality of evaporators are connected in series, a method for concentrating a sodium hydroxide aqueous solution, which uses steam produced when evaporating and concentrating the sodium hydroxide aqueous solution in an evaporator at the foremost stage, as a heat source of an evaporator at the last stage, thereby reducing steam usage, is provided.

According to an exemplary embodiment, a method for concentrating a sodium hydroxide aqueous solution includes: in a stepwise concentration process of sodium hydroxide aqueous solution, including a concentration part in which a plurality of evaporators from a first evaporator to a nth evaporator are connected in series, adding a sodium hydroxide aqueous solution to the first evaporator and then performing evaporation to obtain a first sodium hydroxide concentrate, and recovering steam evaporated from the sodium hydroxide aqueous solution; and adding the first sodium hydroxide concentrate to an evaporator at a subsequent stage, and adding the steam recovered from the first evaporator to a mechanical vapor recompression (MVR) device to perform compression.

According to an exemplary embodiment, the concentration part is configured by connecting a total of n plural evaporators in series, and the number of evaporators may be designed considering the conditions such as concentration of the sodium hydroxide concentrate and steam economic feasibility. For example, n may be 2 to 4, specifically 2 to 3, and more specifically 3. That is, the concentration part may include 2 to 4, specifically 2 or 3, and more specifically 3 evaporators.

The nth evaporator may be recovered from the first evaporator and use steam compressed by MVR as a heat source, and if necessary, may further use steam supplied from the outside as the heat source. In addition, the steam which is recovered from the first evaporator and compressed by MVR may be used as the heat source of the nth evaporator, and also, may be supplied to the outside as surplus steam.

For example, the steam evaporated from the sodium hydroxide aqueous solution in the first evaporator may have a temperature of 60°C to 70°C at a pressure of 0 bar to 0.1 bar. In addition, the steam may be compressed through the MVR to adjust the pressure to 5 bar to 10 bar and the temperature to 170°C to 180°C. A steam temperature may be raised to a recyclable level as the heat source of the nth evaporator, by compressing the steam evaporated from the sodium hydroxide aqueous solution in the first evaporator to the pressure range.

The number of stages of the mechanical vapor recompression (MVR) device may be designed considering the conditions such as the heat source added to the nth evaporator and the temperature and pressure of sodium hydroxide. For example, the MVR may be provided with 3 stages to 10 stages, 5 stages to 10 stages, or 7 stages to 10 stages.

The first evaporator to the n-1th evaporator may use the steam evaporated from the sodium hydroxide concentrate added to the evaporator at the subsequent stage of each evaporator as the heat source of each evaporator. For example, when the number of plural evaporators is 3, the first evaporator may use steam evaporated from the first sodium hydroxide concentrate added to the second evaporator as the heat source, and the second evaporator may use steam evaporated from the second sodium hydroxide concentrate added to the third evaporator as the heat source.

In addition, a n-1th sodium hydroxide concentrate obtained in the n-1th evaporator may be added to the nth evaporator, and the n-1th sodium hydroxide concentrate may be evaporated to obtain a nth sodium hydroxide concentrate. For example, when the number of plural evaporators is 3, a sodium hydroxide aqueous solution may be added to a first evaporator and evaporated to obtain the first sodium hydroxide concentrate; the first sodium hydroxide concentrate obtained in the first evaporator may be added to a second evaporator and evaporated to obtain a second sodium hydroxide concentrate; and the second sodium hydroxide concentrate obtained in the second evaporator may be added to a third evaporator and evaporated to obtain a third sodium hydroxide concentrate as a product.

Herein, the concentration from the sodium hydroxide aqueous solution to the nth sodium hydroxide concentrate may be increased stepwise. Specifically, the concentration of the sodium hydroxide aqueous solution added to the first evaporator may be 26 wt% to 34 wt%, preferably 28 wt% to 34 wt%, and more preferably 30 wt% to 34 wt%. Sodium hydroxide (NaOH) is prepared by electrolyzing a NaCl aqueous solution in an electrolytic cell, and the concentration of the NaOH aqueous solution obtained at this time may be within the range, and more specifically, the concentration of the NaOH aqueous solution may be changed depending on the operating conditions of the electrolytic cell.

In addition, the concentration of the nth sodium hydroxide concentrate obtained by the nth evaporator may be 48 wt% to 52 wt%, preferably 49 wt% to 51 wt%. The NaOH aqueous solution is concentrated so as to satisfy the concentration range, thereby removing NaCl remaining in the NaOH aqueous solution. In addition, the concentration of the NaOH concentrate is increased to the range to increase viscosity, which lowers ion mobility, and thus, an NaOH concentrate having lowered corrosiveness may be obtained as a product.

For example, when the number of plural evaporators is 3 (n = 3), the concentration of a sodium hydroxide aqueous solution added to a first evaporator may be 26 wt% to 34 wt%, the concentration of the first sodium hydroxide concentrate discharged from the first evaporator (that is, added to a second evaporator) may be 34 wt% to 40 wt%, the concentration of a second sodium hydroxide concentrate discharged from the second evaporator (that is, added to a third evaporator) may be 40 wt% to 44 wt%, and the concentration of a third sodium hydroxide concentrate discharged from the third evaporator may be 48 wt% to 52 wt%.

Meanwhile, in a plurality of evaporators from the first evaporator to the nth evaporator, an evaporator at a former stage may be operated at relatively low pressure and temperature as compared with an evaporator at a subsequent stage. For example, when the number of plural evaporator is 3, a first evaporator may be operated at a temperature of 50°C or higher and lower than 80°C and a pressure of 0 bar (that is, full vacuum) or higher and lower than 0.1 bar, a second evaporator may be operated at a temperature of 80°C or higher and lower than 120°C and a pressure of 0.1 bar or higher and lower than 1 bar, and a third evaporator may be operated at a temperature of 120°C to 160°C and a pressure of 1 bar to 2 bar. As such, the evaporator at the subsequent stage is operated at relatively high pressure and temperature as compared with the evaporator at the former stage, thereby further concentrating the sodium hydroxide concentrate having an increased concentration through the evaporator at the former stage in the evaporator at the subsequent stage. In addition, the steam evaporated from the sodium hydroxide concentrate in the evaporator at the subsequent stage may have temperature and pressure at a level where the steam may be used as the heat source of the evaporator at the former stage.

According to an exemplary embodiment, in order to increase thermal energy efficiency of the concentration process, the first sodium hydroxide concentration part to the n-1 sodium hydroxide concentration part, which are discharged from each of the first evaporator to the n-1th evaporator, may be preheated by heat exchange with the nth sodium hydroxide concentrate and/or condensed water of the steam used as the heat source in the nth evaporator. Since the operation temperature of the nth evaporator at the last stage is the highest of the plurality of evaporators, the first sodium hydroxide concentrate to the n-1th sodium hydroxide concentrate having a relatively low temperature may be preheated, using the nth sodium hydroxide concentrate discharged from the nth evaporator and/or the condensed water of steam used as the heat source in the nth evaporator, thereby recovering sensible heat.

As an example, the first sodium hydroxide concentrate to the n-1th sodium hydroxide concentrate which are discharged from each of the first evaporator to the n-1th evaporator, may be preheated by heat exchange with the nth sodium hydroxide concentrate, respectively, and then added to the evaporator at the subsequent stage of each evaporator.

As another example, the first sodium hydroxide concentrate to the n-1th sodium hydroxide concentrate which are discharged from each of the first evaporator to the n-1th evaporator, may be preheated by heat exchange with the condensed water of steam used as the heat source in the nth evaporator, respectively, and then added to the evaporator at the subsequent stage of each evaporator.

As another example, the first sodium hydroxide concentrate to the n-1th sodium hydroxide concentrate which are discharged from each of the first evaporator to the n-1th evaporator, may be partly diverged, respectively and preheated by heat exchange with the nth sodium hydroxide concentrate, and the rest may be preheated by heat exchange with condensed water of steam used as the heat source in the nth evaporator and then added to the evaporator at the subsequent stage of each evaporator.

Hereinafter, the present disclosure will be described in more detail with reference to the drawings, for better understanding of the present disclosure.

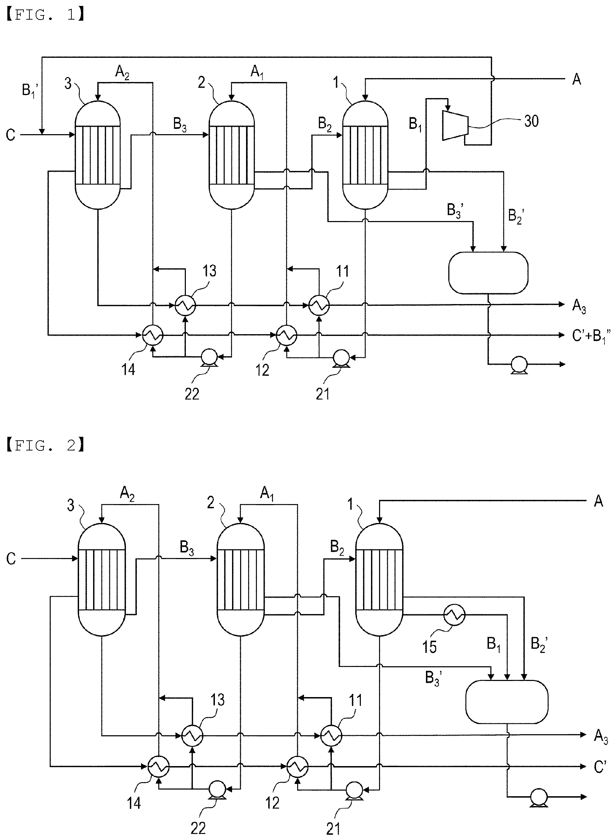

FIG. 1 is a concentration process flow diagram of a sodium hydroxide aqueous solution according to an exemplary embodiment of the present disclosure provided with 3 evaporators (n = 3) in a concentration part.

Referring to FIG. 1, in a sodium hydroxide aqueous solution evaporation system including an evaporation part provided with a first evaporator 1, a second evaporator 2, and a third evaporator 3, the sodium hydroxide aqueous solution (A) is supplied to the first evaporator 1. The sodium hydroxide aqueous solution is evaporated in the first evaporator 1 to obtain a first sodium hydroxide concentrate ($A_1$), and steam ($B_1$) evaporated from the sodium hydroxide aqueous solution is recovered. Herein, the operating temperature of the first evaporator 1 may be 50°C or higher and lower than 80°C and the operating pressure may be 0 bar or higher and lower than 0.1 bar.

Steam ($B_1$) evaporated from the sodium hydroxide aqueous solution is added to a mechanical vapor recompression device (MVR) device 30 and compressed into high-pressure steam ($B_1'$). Herein, the pressure of the high-pressure steam ($B_1'$) may be adjusted to 5 bar to 10 bar, specifically 7 bar to 9 bar, and more specifically 7.5 bar to 8.5 bar, and the temperature may be 170°C to 180°C. The high-pressure steam ($B_1'$) compressed by the MVR is supplied to a heat source of the third evaporator 3 disposed at the last stage with steam (C) supplied from the outside.

The first sodium hydroxide concentrate ($A_1$) obtained from the first evaporator 1 is supplied to the second evaporator 2 through a pump 21. The first sodium hydroxide concentrate may be evaporated in the second evaporator 2 to obtain the second sodium hydroxide concentrate ($A_2$), and steam ($B_2$) evaporated from the first sodium hydroxide concentrate may be recovered. Herein, the operating temperature of the second evaporator 2 may be 80°C or higher and lower than 120°C and the operating pressure may be 0.1 bar or higher and lower than 1 bar.

Steam ($B_2$) evaporated from the first sodium hydroxide concentrate may be supplied to the heat source of the first evaporator 1 and exchange heat with the sodium hydroxide aqueous solution (A). Herein, the pressure of the steam ($B_2$) may be 0 bar to 1 bar, specifically 0.1 bar to 0.5 bar, and more specifically 0.3 bar, and the temperature may be 100°C to 110°C. Condensed water ($B_2'$) after the heat exchange with the sodium hydroxide aqueous solution may be collected in a vapor condensate drum.

The second sodium hydroxide concentrate ($A_2$) obtained from the second evaporator 2 is supplied to the third evaporator 3 through a pump 22. The second sodium hydroxide concentrate may be evaporated in the third evaporator 3 to obtain the third sodium hydroxide concentrate ($A_3$) as a product having a concentration to be desired, and steam ($B_3$) evaporated from the second sodium hydroxide concentrate may be recovered. Herein, the operating temperature of the third evaporator 3 may be 120°C to 160°C, and the operating pressure may be 1 bar to 2 bar.

Steam ($B_3$) evaporated from the second sodium hydroxide concentrate may be supplied to the heat source of the second evaporator 2 and exchange heat with the first sodium hydroxide aqueous solution ($A_1$). Herein, the pressure of the steam ($B_3$) may be 1 bar to 2 bar, specifically 1.3 bar to 1.8 bar, and more specifically 1.6 bar to 1.7 bar, and the temperature may be 155°C to 165°C. Condensed water ($B_3'$) after the heat exchange with the first sodium hydroxide concentrate may be collected in the vapor condensate drum.

Meanwhile, the high-pressure steam ($B_1'$) and external steam (C) which are supplied as the heat source of the third evaporator 3 which is the evaporator at the last stage may exchange heat with the second sodium hydroxide concentrate ($A_2$) in the third evaporator 3 and then discharged as condensed water ($C'+B_1''$).

If necessary, the third sodium hydroxide concentrate ($A_3$) and/or the condensed water ($C'+C_1''$) may preheat the first sodium hydroxide concentrate ($A_1$) and the second sodium hydroxide concentrate ($A_2$), respectively, through the heat exchangers 11, 12, 13, and 14. Specifically, the third sodium hydroxide concentrate ($A_3$) exchanges heat with a stream which is a part diverged from the second sodium hydroxide concentrate ($A_2$) in the heat exchanger 13, and the condensed water ($C'+B_1''$) may exchange heat with the rest of the stream of the second sodium hydroxide concentrate ($A_2$) in a heat exchanger 14. Subsequently, the third sodium hydroxide concentrate ($A_3$) passed through the heat exchanger 13 exchanges heat with the stream which is a part diverged from the first sodium hydroxide concentrate ($A_1$) in the heat exchanger 11, and the condensed water ($C'+B_1''$) passed through the heat exchanger 14 may exchange heat with the rest of the stream of the first sodium hydroxide concentrate ($A_1$) in the heat exchanger 12.

Herein, a part of the stream of the first sodium hydroxide concentrate ($A_1$) and the rest of the stream which are preheated in the heat exchangers 11 and 12, respectively, may be combined again and added to the second evaporator 2, and a part of the stream of the second sodium hydroxide concentrate ($A_2$) and the rest of the stream which are preheated in the heat exchangers 13 and 14, respectively, may be combined again and added to the third evaporator 3.

Hereinabove, the method for concentrating a sodium hydroxide aqueous solution according to the present disclosure has been described and illustrated in the drawings; however, the description and the illustration in the drawings are the description and the illustration of only core constitutions for understanding of the present disclosure, and in addition to the process and apparatus described above and illustrated in the drawings, the process and the apparatus which are not described and illustrated separately may be appropriately applied and used for carrying out the method for concentrating a sodium hydroxide aqueous solution according to the present disclosure.

Hereinafter, the present disclosure will be described in detail through the following examples. However, the following examples are intended to describe the present disclosure in more detail, and the scope of the present disclosure is not limited to the following examples.

**[Examples]**

Example 1

As shown in FIG. 1, a NaOH aqueous solution (A) at a concentration of 32 wt% was supplied to a first evaporator 1 to obtain a first NaOH concentrate ($A_1$) at a concentration of 37 wt%, the first NaOH concentrate ($A_1$) was added to a second evaporator 2 through a pump 21 to obtain a second NaOH concentrate ($A_2$) at a concentration of 42 wt%, and the second NaOH concentrate ($A_2$) was added to a third evaporator 3 through a pump 22 to obtain a third NaOH concentrate ($A_3$) concentrated to a concentration of 50 wt%.

At this time, the operating temperature of the first evaporator 1 was adjusted to 58°C to 62°C (that is, the temperature of the NaOH aqueous solution added to the first evaporator was 58°C, and the temperature of the first NaOH concentrate discharged from the first evaporator was 62°C), and the operating pressure was adjusted to 0.07 bar; the operating temperature of the second evaporator 2 was adjusted to 98°C to 106°C (that is, the temperature of the NaOH aqueous solution added to the second evaporator was 98°C, and the temperature of the second NaOH concentrate discharged from the second evaporator was 106°C), and the operating pressure was adjusted to 0.38 bar; and the operating temperature of the third evaporator 33 was adjusted to 148°C to 162°C (that is, the temperature of the second NaOH concentrate added to the third evaporator was 148°C, and the temperature of the third NaOH concentrate discharged from the third evaporator was 162°C), and the operating pressure was adjusted to 1.69 bar.

In addition, the first evaporator 1 used steam ($B_2$) at a temperature of 105°C and a pressure of 0.3 bar evaporated from the first NaOH concentrate ($A_1$) as a heat source in the second evaporator 2, the second evaporator 2 used steam ($B_2$) at a temperature of 162°C and a pressure of 1.67 bar evaporated from the second NaOH concentrate ($A_2$) from the third evaporator 3 as a heat source, and the third evaporator 3 used high-pressure steam ($B_1'$) obtained by compressing steam (C) at a temperature of 172°C and a pressure of 8.16 bar supplied from the outside and steam ($B_1$) at a temperature of 62.1°C and a pressure of 0.07 bar evaporated from the NaOH aqueous solution (A) in the first evaporator 1 to a temperature of 171.6°C and a pressure of 8.16 bar through a 10-stage MVR 30 as a heat source.

In addition, the third NaOH concentrate ($A_3$) discharged from the third evaporator 3 was passed through heat exchangers 11 and 13 and then obtained as a product, the condensed water ($C'+B_1''$) of the heat source of the third evaporator 3 was passed through heat exchangers 12 and 14 and then discharged, and thus, the first NaOH concentrate ($A_1$) and the second NaOH concentrate ($A_2$) were preheated before being added to the second evaporator 2 and the third evaporator 3, respectively.

Meanwhile, the condensed water ($B_2'$, $B_3'$) after being used in the first evaporator 1 and the second evaporator 2 as a heat source was collected in a vapor condensate drum.

Comparative Example 1

As shown in FIG. 2, a NaOH aqueous solution (A) at a concentration of 32 wt% was supplied to a first evaporator 1 to obtain a first NaOH concentrate ($A_1$) at a concentration of 36.7 wt%, the first NaOH concentrate ($A_1$) was added to a second evaporator 2 through a pump 21 to obtain a second NaOH concentrate ($A_2$) at a concentration of 41.8 wt%, and the second NaOH concentrate ($A_2$) was added to a third evaporator 3 through a pump 22 to obtain a third NaOH concentrate ($A_3$) concentrated to a concentration of 50 wt%.

Comparative Example 1 was operated in the same manner as in Example 1, except that steam ($B_1$) evaporated from the NaOH aqueous solution (A) was not compressed and used as the heat source of the third evaporator in the first evaporator 1. Specifically, the steam ($B_1$) evaporated from the NaOH aqueous solution (A) in the first evaporator 1 was condensed in the condenser 15 using cooling water and then collected in the vapor condensate drum.

Comparative Example 2

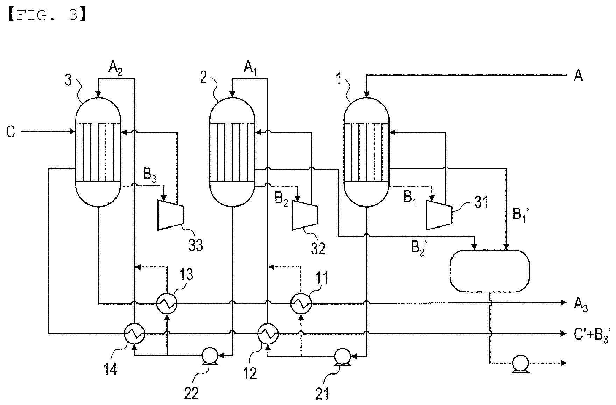

As shown in FIG. 3, a NaOH aqueous solution (A) at a concentration of 32 wt% was supplied to a first evaporator 1 to obtain a first NaOH concentrate ($A_1$) at a concentration of 36.2 wt%, the first NaOH concentrate ($A_1$) was added to a second evaporator 2 through a pump 21 to obtain a second NaOH concentrate ($A_2$) at a concentration of 43 wt%, and the second NaOH concentrate ($A_2$) was added to a third evaporator 3 through a pump 22 to obtain a third NaOH concentrate ($A_3$) concentrated to a concentration of 50 wt%.

At this time, the operating temperature of the first evaporator 1 was adjusted to 58°C to 62°C, and the operating pressure was adjusted to 0.07 bar; the operating temperature of the second evaporator 2 was adjusted to 100°C to 108°C, and the operating pressure was adjusted to 0.38 bar; and the operating temperature of the third evaporator 33 was adjusted to 151°C to 162°C, and the operating pressure was adjusted to 1.69 bar.

The heat source of the first evaporator 1 was obtained by compressing steam ($B_1$) at a temperature of 62.2°C and a pressure of 0.07 bar evaporated from the NaOH aqueous solution (A) in the first evaporator 1 into steam at a temperature of 188.6°C and a pressure of 0.30 bar through the first MVR 31.

The heat source of the second evaporator 2 was obtained by compressing steam ($B_2$) at a temperature of 105.3°C and a pressure of 0.38 bar evaporated from the first NaOH concentrate ($A_1$) in the second evaporator 2 into steam at a temperature of 180.1°C and a pressure of 2.51 bar through the second MVR 32.

The heat source of the third evaporator 3 was obtained by compressing steam ($B_3$) at a temperature of 161.6°C and a pressure of 1.67 bar evaporated from the second NaOH concentrate ($A_2$) in the third evaporator 3 into steam at a temperature of 177.0°C and a pressure of 6.84 bar through the third MVR 33.

In addition, the third NaOH concentrate ($A_3$) discharged from the third evaporator 3 was passed through heat exchangers 11 and 13 and then obtained as a product, the condensed water ($C'+B_3'$) of the heat source of the third evaporator 3 was passed through heat exchangers 12 and 14 and then discharged, and thus, the first NaOH concentrate ($A_1$) and the second NaOH concentrate ($A_2$) were preheated before being added to the second evaporator 2 and the third evaporator 3, respectively.

Meanwhile, the condensed water ($B_1'$, $B_2'$) after being used in the first evaporator 1 and the second evaporator 2 as a heat source was collected in a vapor condensate drum.

**[Experimental Examples]**

External steam (C) usage supplied to the third evaporator 3 in Example 1 and Comparative Examples 1 and 2 was compared, and the results are shown in the following Table 1.

Specifically, the "steam use rate" in the following Table 1 was obtained by calculating the external steam usage (y) used in each of the examples and the comparative examples based on the external steam usage (x) used in Example 1 as percentage. This is expressed as an equation, as follows:

$$\texttt{Steam use rate (\%) = [(y-x)/x]*100}$$

[Table 1]

|  | Steam use rate |
| --- | --- |
| Example 1 | 0% |
| Comparative Example 1 | 100% |
| Comparative Example 2 | 11.1% |

Referring to Table 1, since the steam use rate after following the example of the present disclosure was lower than that of the comparative examples, it was confirmed that the external steam usage was decreased.

More specifically, in Example 1 using high-pressure steam ($B_1$') produced by compressing evaporated steam ($B_1$) produced in the first evaporator 1 by MVR 30 as the heat source of the third evaporator 3, when the high-pressure steam ($B_1$') started to be produced, the heat supply was sufficiently supplied to the third evaporator 3 only with the high-pressure steam ($B_1$') without adding additional external steam (C). Furthermore, in Example 1, the high-pressure steam ($B_1$') was produced in excess of a heat source supply amount required in the third evaporator 3, and thus, surplus steam was produced. The surplus steam may be supplied to another external process requiring heat source supply or may be sold externally.

Meanwhile, in Comparative Example 1 which did not use the steam ($B_1$) evaporated from the NaOH aqueous solution (A) in the first evaporator as the heat source, external steam usage was significantly larger than that of Example 1, and also, cooling water was further needed for condensing the evaporated steam ($B_1$).

In addition, it was confirmed that in Comparative Example 2, evaporated steams $B_1$, $B_2$, and $B_3$ were used as the heat source in each of a plurality of evaporators 1, 2, and 3, and the external steam usage was decreased as compared with Comparative Example 1, but was larger than the external steam usage of Example 1. In addition, Comparative Example 2 had problems of requiring MVR in each of the plurality of evaporator, which increases process equipment costs, installation sites, and process complexity.

Hereinabove, the exemplary embodiments of the present disclosure have been described, but the present disclosure is not limited thereto, and those with ordinary skill in the art will understand that various changes and modification are possible within the range which is not out of the concept and the scope of the claims described later.

**[Reference signs list]**

1, 2, 3: Evaporators
11, 12, 13, 14: Heat exchanger
15: Condenser
21, 22: Pump
30, 31, 32, 33: Mechanical vapor recompression (MVR) device
A: Sodium hydroxide aqueous solution
$A_1$, $A_2$, $A_3$: Sodium hydroxide concentrate
$B_1$, $B_2$, $B_3$: Evaporated steam
C: External steam

**Claims**

1. A method for concentrating a sodium hydroxide aqueous solution, the method comprising:

   in a stepwise concentration process of sodium hydroxide aqueous solution, including a concentration part in which a plurality of evaporators from a first evaporator to a nth evaporator are connected in series;
   adding a sodium hydroxide aqueous solution to the first evaporator and then performing evaporation to obtain a first sodium hydroxide concentrate, and recovering steam evaporated from the sodium hydroxide aqueous solution; and
   adding the first sodium hydroxide concentrate to an evaporator at a subsequent stage, and adding the steam recovered from the first evaporator to a mechanical vapor recompression device to perform compression, wherein the nth evaporator uses the compressed steam as a heat source.

2. The method for concentrating a sodium hydroxide aqueous solution of claim 1, wherein the heat source of the nth evaporator further includes steam supplied from the outside.

3. The method for concentrating a sodium hydroxide aqueous solution of claim 1, wherein the first evaporator to the n-1th evaporator use the steam evaporated from the sodium hydroxide concentrate added to the evaporator at the subsequent stage of each evaporator as the heat source of each evaporator.

4. The method for concentrating a sodium hydroxide aqueous solution of claim 1, further comprising: adding a n-1th sodium hydroxide concentrate obtained in the n-1th evaporator to the nth evaporator, and evaporating the n-1th sodium hydroxide concentrate to obtain a nth sodium hydroxide concentrate.

5. The method for concentrating a sodium hydroxide aqueous solution of claim 1, wherein n is 2 to 4.

6. The method for concentrating a sodium hydroxide aqueous solution of claim 1, wherein the first sodium hydroxide concentrate to the n-1th sodium hydroxide concentrate, which are discharged from each of the first evaporator to the n-1th evaporator, are preheated by heat exchange with the nth sodium hydroxide concentrate, respectively, and then added to the evaporator at the subsequent stage of each evaporator.

7. The method for concentrating a sodium hydroxide aqueous solution of claim 1, wherein the first sodium hydroxide concentrate to the n-1th sodium hydroxide concentrate, which are discharged from each of the first evaporator to the n-1th evaporator, are preheated by heat exchange with condensed water of the steam used as the heat source in the nth evaporator, respectively, and then added to the evaporator at the subsequent stage of each evaporator.

8. The method for concentrating a sodium hydroxide aqueous solution of claim 1, wherein the first sodium hydroxide concentrate to the n-1th sodium hydroxide concentrate, which are discharged from each of the first evaporator to the n-1th evaporator, are partly diverged, respectively and preheated by heat exchange with the nth sodium hydroxide concentrate, and the rest is preheated by heat exchange with condensed water of the steam used as the heat source in the nth evaporator and then added to the evaporator at the subsequent stage of each evaporator.

9. The method for concentrating a sodium hydroxide aqueous solution of claim 1,

   wherein a concentration of the sodium hydroxide aqueous solution added to the first evaporator is 26 wt% to 34 wt%, and
   a concentration of the nth sodium hydroxide concentrate is 48 wt% to 52 wt%.

10. The method for concentrating a sodium hydroxide aqueous solution of claim 1,

   wherein steam evaporated from the sodium hydroxide aqueous solution in the first evaporator has a temperature of 60°C to 70°C at a pressure of 0 bar to 0.1 bar, and
   the steam is compressed through the mechanical vapor recompression device to adjust the pressure to 5 bar to 10 bar and the temperature to 170°C to 180°C.

11. The method for concentrating a sodium hydroxide aqueous solution of claim 1, wherein the mechanical vapor recompression device is provided with 3 stages to 10 stages.

12. The method for concentrating a sodium hydroxide aqueous solution of claim 1, wherein in the plurality of evaporators from the first evaporator to the nth evaporator, the evaporator at the former stage is operated at relatively low pressure and temperature as compared with the evaporator at the subsequent stage.

【FIG. 1】

【FIG. 2】

【FIG. 3】

## INTERNATIONAL SEARCH REPORT

| International application No. |
|---|
| **PCT/KR2025/010523** |

**A. CLASSIFICATION OF SUBJECT MATTER**

**C01D 1/04**(2006.01)i; **C01D 1/42**(2006.01)i; **B01D 1/28**(2006.01)i; **B01D 1/30**(2006.01)i

According to International Patent Classification (IPC) or to both national classification and IPC

**B. FIELDS SEARCHED**

Minimum documentation searched (classification system followed by classification symbols)

C01D 1/04(2006.01); B01D 1/00(2006.01); B01D 1/22(2006.01); B01D 1/26(2006.01); C01D 1/42(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 수산화나트륨(NaOH, sodium hydroxide), 농축(concentrate), 압축기 (compressor), 스팀(steam), 열교환(heat exchange)

**C. DOCUMENTS CONSIDERED TO BE RELEVANT**

| Category* | Citation of document, with indication, where appropriate, of the relevant passages | Relevant to claim No. |
|---|---|---|
| X | JP 2024-092165 A (KIMURA CHEM. PLANTS CO., LTD.) 08 July 2024 (2024-07-08) claims 1-8; paragraphs [0023], [0053], [0067]-[0069]; figure 1 | 1,4-12 |
| Y | | 2,3 |
| Y | JP 2019-089678 A (KIMURA CHEM. PLANTS CO., LTD.) 13 June 2019 (2019-06-13) claims 1-3; paragraph [0030]; figure 1 | 2,3 |
| A | JP 2014-181139 A (TOAGOSEI CO., LTD.) 29 September 2014 (2014-09-29) claims 1-7 | 1-12 |
| A | JP 2014-205580 A (TOAGOSEI CO., LTD.) 30 October 2014 (2014-10-30) claims 1-4 | 1-12 |
| A | JP 05-245302 A (KIMURA CHEM. PLANTS CO., LTD.) 24 September 1993 (1993-09-24) entire document | 1-12 |

☐ Further documents are listed in the continuation of Box C.　　☑ See patent family annex.

| | | | |
|---|---|---|---|
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 October 2025** | **21 October 2025** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

### INTERNATIONAL SEARCH REPORT
**Information on patent family members**

International application No.

**PCT/KR2025/010523**

| Patent document cited in search report | | | Publication date (day/month/year) | Patent family member(s) | | | Publication date (day/month/year) |
|---|---|---|---|---|---|---|---|
| JP | 2024-092165 | A | 08 July 2024 | None | | | |
| JP | 2019-089678 | A | 13 June 2019 | JP | 6522084 | B1 | 29 May 2019 |
| JP | 2014-181139 | A | 29 September 2014 | JP | 6015507 | B2 | 26 October 2016 |
| JP | 2014-205580 | A | 30 October 2014 | JP | 5971177 | B2 | 17 August 2016 |
| JP | 05-245302 | A | 24 September 1993 | JP | 06-73601 | B2 | 21 September 1994 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240131171